# EUROPEAN PATENT APPLICATION

(11) **EP 0 664 416 A1**
(43) Date of publication of application: **26.07.1995**
(21) Application number: 95300091.6
(22) Date of filing: 09.01.1995
(51) Int. Cl.: F16L 51/02, F01N 7/18

(54) **Connection means in the exhaust tube of an internal combustion engine**

(30) Priority: 13.01.1994 FI 16494
(71) Applicant: Wartsila Diesel International Ltd. OY, 00530 Helsinki (FI)
(72) Inventor: Kytölä, Juha, SF-65280 Vaasa (FI)
(74) Representative: Newby, John Ross

(57) **Abstract**

The invention relates to a connecting arrangement in an exhaust pipe of an IC engine for joining two successive exhaust pipe parts (1, 2) flexibly to each other. The arrangement comprises a separate bellows unit (3) flexible in the axial direction of the exhaust pipe and provided with flange means (5, 6) at both ends thereof by means of which the bellows unit (3) is arranged to be fixed separately to both the exhaust pipe parts (1, 2) through corresponding flange means (1a, 2b) provided thereon. In the first of said exhaust pipe parts (1) encountered in the flow direction of the exhaust gases, the flange means (1a) is located at a distance from the end of the exhaust pipe part (1) associated with the bellows unit (3) so that when the bellows unit (3) is assembled, an end (1c) of said exhaust pipe part (1) extends inside it to a close vicinity of the end of the second exhaust pipe part (2) in order to thereby internally protect the bellows unit (3). The flange means (2b) of the second exhaust pipe part (2), in the flow direction, is located at the end of the exhaust pipe part (2) associated with the bellows unit (3).

## Description

The invention relates to the exhaust system of an internal combustion (IC) engine having a plurality of cylinders, especially a diesel engine, which system includes at least two successive exhaust pipe parts flexibly connected to each other in accordance with the preamble of claim 1.

In the exhaust pipe of any large internal combustion engine with several cylinders, especially a diesel engine intended for marine applications (e.g. as a main propulsion engine or an auxiliary engine in a ship or for use in a power plant producing thermal and/or electrical energy), it is necessary to have a flexible connection in the exhaust system between the cylinders to accommodate size changes induced by thermal expansion. Solutions are known in which the pipe parts to be connected to each other are telescopically arranged one inside the other. In addition bellows-like elements have been utilised as the expansible component between pipe parts, whereby also separate inner tubes are used for protecting the bellows-like elements.

The present invention seeks to create an improved connection arrangement based on an expansible component in an exhaust system with a less complicated and more durable construction than previously for protecting the expansible component from the exhaust gas flow while still making it possible to accommodate thermal expansion. A further aim of the invention is to facilitate servicing of an exhaust system by making it possible, for instance, to detach and replace, when necessary, one exhaust pipe part of the system independently of the rest of the exhaust pipe system.

The aims of the invention can be met with an arrangement as set out in the following claim 1. One of the exhaust pipe parts, preferably the first one encountered in the flow direction of the exhaust has the relevant connection means spaced from the downstream end of the said one exhaust pipe part so that when the expansible component is assembled in place, a section of said one exhaust pipe part extends inside the expansible component to a position close to the upstream end of the next exhaust pipe part encountered in the flow direction in order to thereby internally protect the expansible component, the connection means of the other exhaust pipe part encountered in the flow direction, being located at the end of the other exhaust pipe part linked to the component. In this way an arrangement with an uncomplicated construction is provided by means of which a bellows element or the like can be effectively shielded from radiant heating by the exhaust gases.

By internally bevelling the end of the second exhaust pipe part first encountered in the flow direction, the exhaust gases can more smoothly be guided past any annular slot appearing between adjacent downstream and upstream ends of the exhaust pipe parts connected to each other.

Any bellows element is, with advantage, made of metal, preferably made of several layers, pressed to the required convoluted shape and welded at its ends to the flange means of the expansible component. Other fabricating solutions may naturally be used as well.

When applying a connection means of the kind used in a system in accordance with the invention to a pluri-cylinder IC engine in which the exhaust pipe comprises, for each cylinder, a separate exhaust pipe part flexibly attachable to the rest of the exhaust pipe and said exhaust pipe part comprises a connection branch for leading the exhaust gases from a respective one cylinder to a common exhaust pipe and for fixing the exhaust pipe part to the engine, the exhaust pipe part in question is with advantage equipped with flange means or the like so as to be attachable at both its ends by means of a bellows unit to the adjacent exhaust pipe parts and detachable therefrom respectively. In this way individual exhaust parts of the exhaust pipe, each representing the length of one cylinder, and together forming the entire exhaust pipe can, in a simple way, be detached, reassembled or replaced without the need for detaching other exhaust pipe parts.

The invention will now be further described in greater detail, by way of example, with reference to the accompanying drawings, in which
Figure 1 is a cross-sectional view of two parts of an exhaust pipe system according to the invention, and

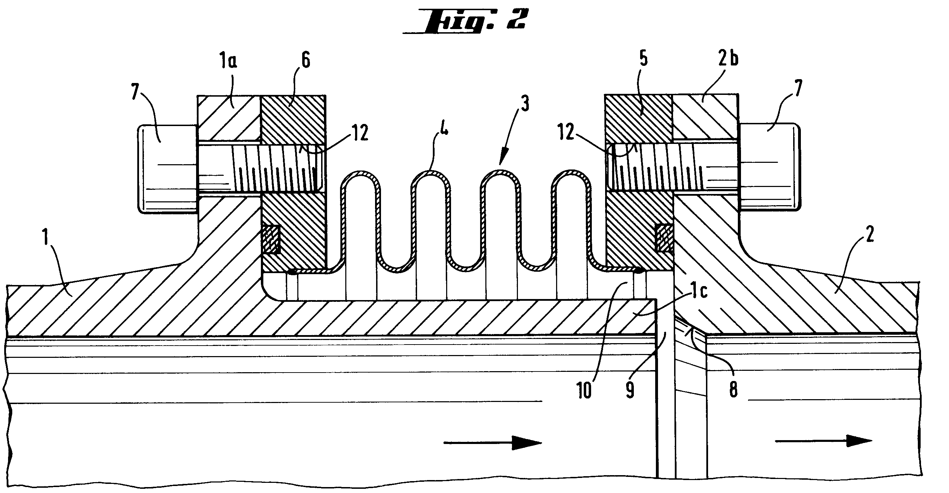

Figure 2 shows an enlargement of the part within the chain-line marked II in Figure 1.

In the drawings, 1 indicates a first exhaust pipe part that is flexibly connected, by means of an expansible component 3, to a second exhaust pipe part 2.

The expansible component 3 comprises a tubular bellows element 4 which is provided with annular flanges 5 and 6, each including apertures 12 for screw bolt attachment. The bellows element 4 may be made of several layers of metal which are pressed to the required convoluted shape. The fixing of the flanges 5 and 6 to the bellows element 4 may, with advantage, be effected by welding. If necessary, use may be made of a spacing ring, to which the bellows element 4 is welded and which ring is then further welded to the respective flange. What is essential is that the expansible component 3 allows movement caused by thermal expansion in the pipe parts 1 and 2, especially in the axial direction, to be accommodated without loss of the integrity of the exhaust system.

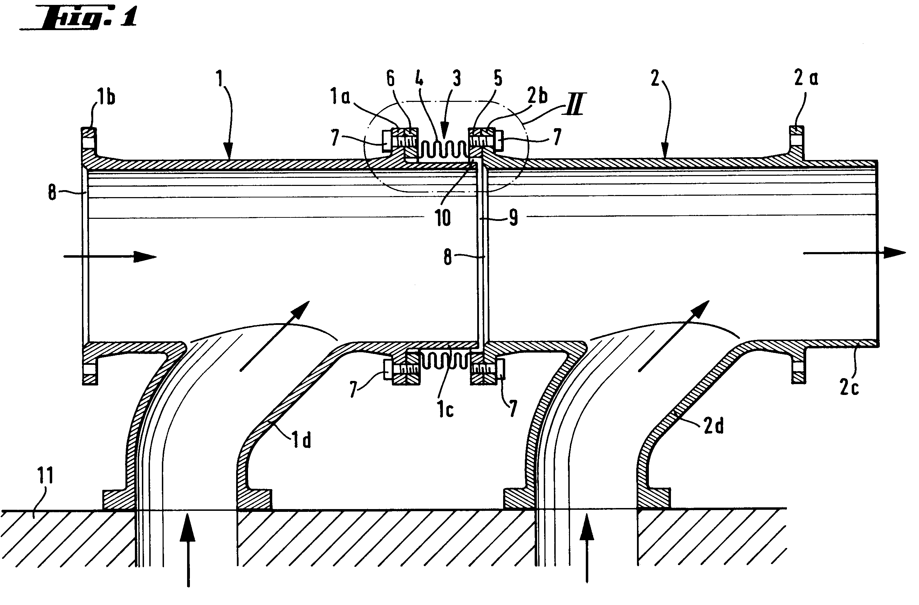

Figure 1 shows an embodiment for an internal combustion engine 11 with several cylinders, the exhaust ports of two adjacent cylinders being shown, each provided with a respective exhaust pipe part 1 and 2. Each pipe part has a connection branch 1d and 2d which is connected to the engine 11 for leading exhaust gases from the cylinders to the exhaust pipe. The flow direction of the exhaust gases is indicated by arrows. The expansible component 3 is secured in place by means of its flange 6 being bolted to a flange la of the first exhaust pipe part 1 encountered in the flow direction and by means of its flange 5 being bolted to a flange 2b in the second exhaust pipe part 2. Threaded bolts are shown at 7 in the drawings.

As is evident from Figure 1, the flange la on the exhaust pipe part 1 is axially spaced from the downstream end of the part 1 whereby a section lc of the pipe part 1 extends inside the bellows element 4 in the flow direction to a position close to the upstream end of the second exhaust pipe part 2. Thus the pipe section lc protects the bellows element 4 from direct contact with the hot exhaust gases. In order to further improve this protective effect, a radially extending annular slot 9 remaining between the two pipe parts 1 and 2 at the place of connection and, if necessary, an axially extending annular slot 10 remaining between the pipe section lc and the flange 5 of the bellows element 4 are kept to a minimum size. Additionally, the inside of the pipe part 2, at its end, may be bevelled (as indicated at 8) so that the exhaust gases are more smoothly guided past the slots 9 and 10 existing between the pipe parts 1 and 2.

As is further evident from Figure 1, the pipe parts 1 and 2 may be identical, whereby each may be separately fixed to another similar exhaust pipe part, respectively, by using a similar expansible component 3. The arrangement illustrated has an uncomplicated and durable construction and allows ready detachment and reassembling of an entire exhaust pipe system or removal of just the part coupled to one cylinder without removing any other exhaust pipe parts.

Instead of a flange connection for the component 3, other possible connection arrangements may be utilised. However, if in addition to accommodating for thermal expansion of the exhaust pipe, the easy replacement possibility provided by a bellows unit is also considered important, for example because of operating conditions which will call for replacement of a bellows unit; then, naturally, such a connection arrangement must be chosen that will allow for easy detaching of each bellows unit when required.

The invention is not to be considered as being limited to the embodiment illustrated since several variations thereof are feasible including variations which have features equivalent to, but not necessarily literally within the meaning of, features in any of the following claims.

## Claims

1. An exhaust system of an IC engine (11) having a plurality of cylinders which system includes at least two successive exhaust pipe parts (1, 2) flexibly connected via an axially extensible component (3), **characterised in that** in one of the exhaust pipe parts, preferably the first one encountered in the flow direction of the exhaust gases, the connection means (1a, 2a) is spaced from the downstream end of the said one exhaust pipe part (1) so that when the expansible component (3) is assembled in place, a section (1c) of said one exhaust pipe part (1) extends inside the expansible component (3) to a position close to the upstream end of the next exhaust pipe part (2) encountered in the flow direction in order to thereby internally protect the expansible component (3), the connection means (2b) of the other exhaust pipe part (2) encountered in the flow direction, being located at the end of the other exhaust pipe part (2) linked to the component (3).

2. An exhaust system according to claim 1, **characterised in that** the end of the second exhaust pipe part (2), in the flow direction, is bevelled (8) inside the pipe so that the exhaust gases are more smoothly guided past a slot (9) remaining between the exhaust pipe parts (1, 2) connected to each other.

3. An exhaust system according to claim 1 or 2, **characterised in that** the expansible component (3) includes a bellows element (4) made of metal, preferably of several layers by pressing to the required convoluted shape, the bellows element (4) having its ends welded to flange means (5, 6) .

4. An exhaust system according to any one of the preceding claims, in which the exhaust pipe comprises a separate exhaust tube part (1, 2) for each cylinder flexibly attachable to the rest of the exhaust pipe and each exhaust pipe part (1, 2) comprises a connection branch (1d, 2d) for receiving the exhaust gases of the respective cylinder and for fixing the exhaust pipe part to the engine (11), **characterised in that** each exhaust pipe part (1, 2) is equipped with flanges (1a, 1b, 2a, 2b) so as to be attachable at both its ends by means of a bellows unit (3) to the adjacent exhaust pipe parts and to be detachable therefrom respectively.

5. A component part (1, 2) of a demountable exhaust pipe, said component part having upstream (1b, 2b) and downstream (1a, 2a) fixing means, respectively, adjacent to each end for connecting the component part (1) and another similar component part (2) together end-to-end via an axially flexible annular expansible component (3) and a connection branch (1d, 2d) for receiving exhaust gases from a cylinder of an IC engine (11), **characterised in that** the downstream fixing means (1a) is located outside a shielding tubular section (1c) and spaced from the downstream end thereof, whereby on locating the expansible component (3) between the downstream fixing means (1a) of the component part (1) and the upstream fixing means (2b) of said another component part (2), said expansible component (3) is protected by the shielding tubular section (1c) from thermal radiation from the exhaust gases flowing in the exhaust pipe.

6. A component part according to claim 5, **characterised in that** the expansible component (3) comprises a bellows member (4) clamped between adjacent upstream and downstream fixing means (2b, 1a) of two adjacent parts (1, 2), the length of the bellows member (4) being selected relative to the length of the shielding tubular section (1c) to normally leave a narrow annular slot (9) between the downstream end of the part (1) and the upstream end of the part (2).
